# FASCICULE DE BREVET EUROPEEN

(11) **EP 0 491 680 B1**
(45) Date de publication et mention de la délivrance du brevet: **06.07.1994**
(21) Numéro de dépôt: 92200408.0
(22) Date de dépôt: 22.01.1991
(51) Int. Cl.: B23P 19/04

(54) **Dispositif d'assemblage de deux pièces devant être emboîtées l'une dans l'autre comme une queue de soupape et une collerette ou coupelle**
Verfahren und Vorrichtung zum Zusammenbauen von zwei ineinander zu schachtelnden Teilen, wie z.B. ein Ventil und ein Federteller
Method and device for assembling two parts to be nested one into the other, like a valve stem and a spring retainer

(30) Priorité: 24.01.1990 FR 9000787
(43) Date de publication de la demande: 24.06.1992
(62) Demande divisionnaire de: 91400134.2
(73) Titulaire: RENAULT AUTOMATION, 92109 Boulogne-Billancourt (FR)
(72) Inventeur: Thurier, Yvan, F-94320 Thiais (FR)
(74) Mandataire: Ernst-Schonberg, Michel

(56) Documents cités:
- FR-A- 2 198 532
- PATENT ABSTRACTS OF JAPAN vol. 9, no. 172 (M-397)(1895) 17 Juillet 1985 & JP-A-60 043 108 (MITSUBISHI) 7 Mars 1985

## Description

L'invention concerne un dispositif d'assemblage de deux pièces devant être emboitées l'une dans l'autre comme une queue de soupape avec une collerette ou coupelle, tel que défini par le préambule de la revendication.

Pour solidariser une tige de soupape avec la coupelle ou collerette, prévue pour constituer l'appui du ressort de rappel de la soupape, on utilise généralement une pièce intermédiaire conique constituée par deux demi-cônes qui se juxtaposent dans la coupelle et bloquent la queue de soupape par coincement au contact de la surface interne cônique de la coupelle. Afin d'assurer le bon maintien de la coupelle sur la queue de soupape, cette dernière possède selon une technique connue une gorge annulaire dans laquelle vientt s'engager une saillie prévue sur la face interne des demi-cônes.

Le montage s'effectue alors par enfoncement à force de la coupelle dans laquelle les demi-cônes sont préalablement déposés.

L'amélioration de la fiabilité de l'assemblage a conduit à multiplier et à porter généralement à trois le nombre de gorges. Il s'ensuit que le montage mécanique est plus délicat en raison du grand nombre de possibilités de coincement des demi-cônes dans des positions non désirées.

La publication FR A 2198532 décrit un dispositif manuel de mise en place de pièces intermédiaires qui solidarisent une soupape et son ressort de rappel. La mise en oeuvre du dispositif ne convient pas aux cadences de montage en grande série.

Le dispositif conforme à la caractéristique de la revendication convient à l'assemblage d'une pièce extérieure et d'une pièce intérieure par emboitement de gorges et saillies, prévues respectivement sur l'une des pièces et sur un organe intercalaire à surfaces côniques dont les faces inclinées coopèrent avec une surfacee de même inclinaison portée par l'une des pièces à assembler.

Ce dispositif ainsi réalisé comprend en combinaison un fourreau dont l'une des extrêmités constitue un appui pour la pièce extérieure ou collerette dans laquelle sont introduits les demi-cônes, ledit fourreau étant muni à proximité immédiate dudit appui d'un chambrage de diamètre élargi, sur la périphérie duquel sont répartis les organes générateurs des forces radiales. Des moyens produisent un mouvement relatif entre ledit fourreau et la tige placée dans l'axe de la collerette. Un poussoir pouvant coulisser axialement dans ledit fourreau, est formé par deux parties concentriques, dont les diamètres respectifs sont adaptés pour venir s'appuyer sélectivement d'une part sur les demi-cônes maintenus dans le chambrage par les organes générateurs des forces radiales et d'autre part sur l'extrêmité de la tige. Des moyens de commande solidarisent alors, dans une première phase, la partie externe du poussoir avec le fourreau, puis dans une deuxième phase les deux parties du poussoir entre elles de manière à repousser en même temps les demi-cônes et la tige à l'intérieur de la pièce externe. La temporisation entre les deux phases est telle que la deuxième phase est opérée lorsque les gorges et les nervures respectives des demi-cônes et de la tige sont en regard les une avec les autres.

Le moyen de commande peut être constitué par des billes placées dans des orifices radiaux de la partie externe du poussoir et coopérant, selon la position de cette partie, soit avec une encoche pratiquée dans le fourreau, soit avec une autre encoche pratiquée dans la partie interne du poussoir à un niveau plus proche de la tête du poussoir.

Pour engendrer les forces radiales on utilise à titre d'exemple des aimants, répartis à la périphérie du chambrage de dilatation, quand les parties côniques sont en métal ferro-magnétique.

Ainsi on peut aussi utiliser des forces radiales produites autrement, notamment par dépression dans des ajutages répartis autour du chambrage de dilatation.

On décrira ci-après un mode de réalisation du dispositif de fixation d'une queue de soupape de moteur sur la coupelle ou collerette formant l'appui du ressort de soupape en référence au dessin annexé dans lequel:
la figure 1 est une vue en coupe axiale du fourreau et du poussoir,
les figures 2 et 3 en sont des coupes selon II-II et III-III,
les figures 4 à 9 représentent le dispositif en coupe axiale dans des positions successives de fonctionnement,
la figure 10 montre en coupe axiale l'assemblage terminé,
la figure 11 montre une variante.

Le dispositif représenté sur le dessin comporte trois éléments télescopiques à savoir un fourreau 1 percé d'un alésage central, un manchon 2 pouvant coulisser dans ledit alésage et un piston 3 pouvant coulisser dans le manchon 2, l'ensemble du manchon 2 et du piston 3 constituant un poussoir qui fonctionne en deux temps comme on l'expliquera ci-après.

L'extrêmité inférieure du piston 3 a une forme conique.

A une extrêmité le fourreau 1 comporte une partie conformée 1C qui constitue un appui pour la collerette ou coupelle.

Le fourreau 1 comporte six alésages radiaux 1A opposés deux à deux qui reçoivent six aimants 5, disposés de façon à créer un maximum de flux vers l'axe du système.

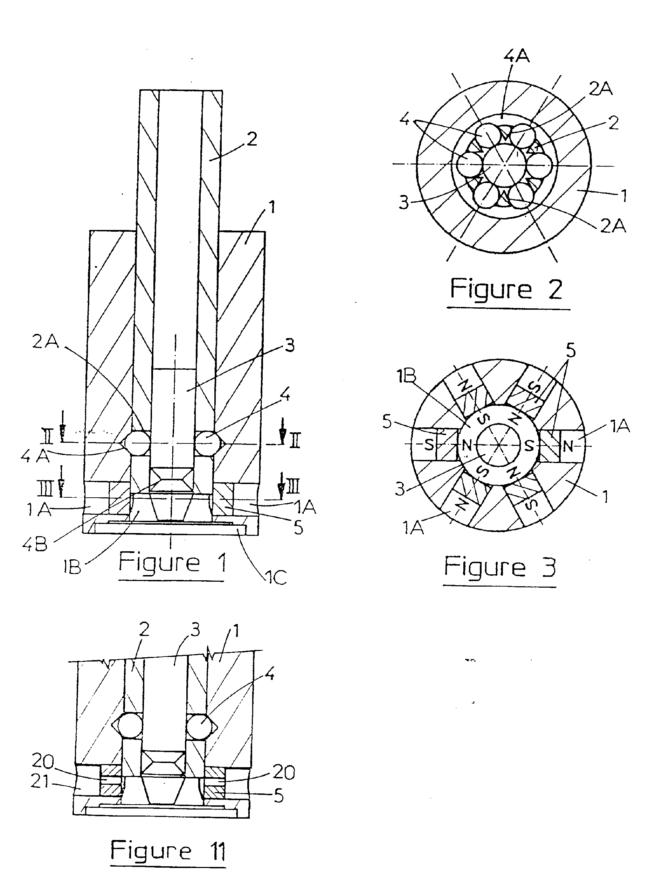

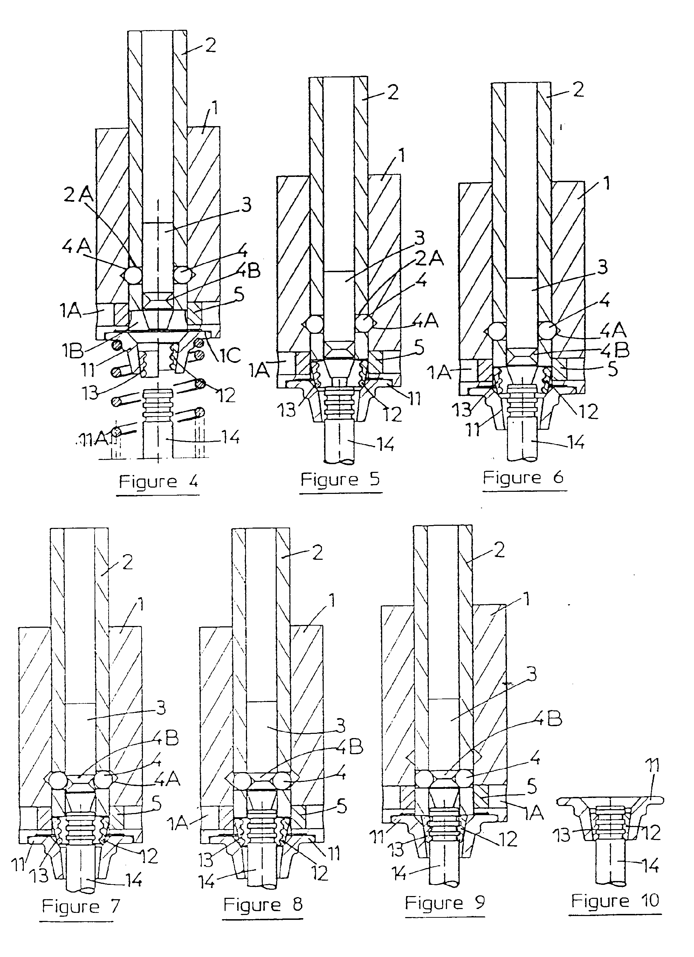

Dans le manchon 2 sont pratiqués six alésages radiaux 2A opposés deux à deux dans lesquels sont disposées six billes 4 qui, selon la position relative des pièces, coopèrent soit avec une gorge 4A pratiquée dans le fourreau 1 (position des figures 4 à 6), soit avec une gorge 4B pratiquée sur le piston 3 (position des figures 8 et 9).

Les figures 4 à 9 permettent de comprendre le fonctionnement du dispositif.

Sur la figure 4 la coupelle 11 est représentée en appui sur la surface d'extrêmité 1C du fourreau 1. Elle peut être maintenue par une pince (non représentée).

Les deux demi-cônes 12 et 13 qui ont préalablement été introduits dans la coupelle 11 sont portés par celle-ci. Il est à noter que la position relative de ces deux demi-cônes importe peu. L'ensemble est placé dans l'axe de la queue de soupape 14 par le robot qui le porte par le manchon 2, le ressort de rappel 11A de la soupape étant en place autour de la tige pour appui sur la coupelle 11. Le manchon 2 et le fourreau 1 sont liés axialement par l'intermédiaire des six billes 4.

Les figures 5 à 9 représentent les positions relatives successives des divers éléments au cours de la descente du manchon 2 que les billes 4 solidarisent au fourreau 1 dans cette phase.

Dans ce mouvement relatif du fourreau 1 et de la queue de soupape 14, cette queue pousse les demi-cônes 12, 13 vers le haut, de sorte que ces demi-cônes pénètrent dans le chambrage de grand diamètre 1B où la force magnétique des aimants 5 les écarte l'un de l'autre en dilatant le passage régnant entre eux; les demi-cônes sont finalement plaqués contre les aimants (figures 5 à 8).

La figure 6 montre le piston 3 qui arrive en contact avec l'extrêmité de la queue de soupape. Les deux demi-cônes étant suffisamment écartés pour ne pas toucher la queue de soupape, celle-ci pénètre entre les aimants.

Sur la figure 7, on voit le piston 3 arrêté par la queue de soupape tandis que le fourreau 1 continue sa descente. Les billes 4 commencent à pénétrer dans la gorge annulaire du piston 3. Le fourreau 1 commence à remonter.

La figure 8 correspond à un état transitoire où le fourreau 1 est libéré tandis que le piston 3 se retrouve lié axialement avec le manchon 2. Ainsi, le manchon 2 est arrêté dans sa descente et sa face inférieure localise axialement les reliefs des demi-cônes en face des gorges de la queue de soupape. Dans la suite du mouvement relatif, les demi-cônes 12 et 13 sont rapprochés par l'alésage conique de la coupelle 11.

La figure 9 montre la position relative stable des divers éléments en fin de descente du manchon 2.

La figure 10 montre l'assemblage terminé et séparé du dispositif d'insertion.

Sur la figure 11 qui est une vue partielle d'une variante, on voit que les aimants 5 précédemment décrits sont remplacés par des ajutages 20 reliés à une source en dépression communiquant avec l'amont 21 de ces ajutages et non dessinée. La dépression arrivant sur ces ajutages plaque contre eux les demi-cônes 12 et 13 quand ils pénètrent dans le chambrage 1B. Le fonctionnement est le même que précedemment.

## Revendications

1. Dispositif de réalisation d'un assemblage de deux pièces externe (11) et interne (14) devant être emboitées l'une dans l'autre comme une queue de soupape et une collerette ou coupelle, caractérisé en ce qu'il comporte un ensemble d'outillage à parties télescopiques (2,3) mobiles dans un fourreau (1) et adaptées pour s'appuyer respectivement sur des éléments intermédiaires (12,13) de l'assemblage situés entre la pièce externe (11) et interne (14) et sur la pièce interne (14), et que ledit fourreau est muni à son extrêmité d'appui d'un chambrage (1B) à la périphérie duquel sont disposés des moyens d'écartement.

2. Dispositif selon la revendication 1, caractérisé en ce que les moyens d'écartement sont constitués par des aimants.

3. Dispositif selon la revendication 1, caractérisé en ce que les moyens d'écartement sont constitués par des ajutages reliés à une source de dépression.

4. Dispositif selon l'une quelconque des revendications 1 à 3, caractérisé en ce que les parties télescopiques (2,3) sont constituées par un manchon creux (2) mobile dans le fourreau (1) et par un piston (3) coulissant dans ledit manchon (2), et que des moyens de verrouillage libérables par déplacement axial des parties télescopiques (2,3) sont ménagés entre le manchon (2) et le fourreau (1) d'une part et entre le manchon (2) et le poussoir (3) d'autre part.

5. Dispositif selon la revendication 4, caractérisé en ce que les moyens de verrouillage sont constitués par un jeu de billes (4) respectivement placées dans des perforations radiales (2A) du manchon (2) qui coopère successivement avec une gorge de verrouillage (4A) portée par le fourreau (1) et avec une gorge de verrouillage (4B) portée par le piston (3).

## Claims

1. A device for carrying out the assembly of two components, one outer (11) and one inner (14), to be nested one into the other, such as a valve stem and a retainer or collar, characterized in that it comprises a tool assembly with telescopic components (2, 3) moving in a sheath (1) and adapted to be applied respectively on intermediate members (12, 13) of the assembly located between the outer component (11) and the inner component (14) and on the inner component (14) and in that this sheath is provided at its bearing end with a recess (1B) on the periphery of which spacer means are disposed.

2. A device as claimed in claim 1, characterized in that the spacer means are formed by magnets.

3. A device as claimed in claim 1, characterized in that the spacer means are formed by nozzles connected to a vacuum source.

4. A device as claimed in any one of claims 1 to 3, characterized in that the telescopic portions (2, 3) are formed by a hollow sleeve (2) moving in the sheath (1) and by a piston (3) sliding in the sleeve (2) and in that locking means which may be released by axial displacement of the telescopic means (2, 3) are provided, on the one hand, between the sleeve (2) and the sheath (1) and, on the other hand, between the sleeve (2) and the pusher device (3).

5. A device as claimed in claim 4, characterized in that the locking means are formed by a set of balls (4) disposed respectively in radial perforations (2A) of the sleeve (2) which set of balls cooperates successively with a locking groove (4A) borne by the sheath (1) and with a locking groove (4B) borne by the piston (3).

## Patentansprüche

1. Vorrichtung zum Zusammenbau eines äußeren Teils (11) mit einem inneren Teil (14), die ineinander eingreifen, wie z.B. einen Ventilschaft und einen Federteller oder eine Federplatte, **dadurch gekennzeichnet,** daß sie eine Werkzeuganordnung aufweist mit ausziehbaren Teilen (2, 3), die beweglich in einer Buchse (1) gelagert sind und die sich auf Zwischenteilen (12, 13) der Anordnung abstützen können, welche zwischen dem äußeren Teil (11) und dem inneren Teil (14) und auf dem inneren Teil (14) vorgesehen sind und daß die Buchse an ihrem stützseitigen Ende mit einer Senkung versehen ist, an deren Umfang eine Aufweitungsanordnung vorgesehen ist.

2. Vorrichtung nach Anspruch 1, **dadurch gekennzeichnet,** daß die Aufweitungsanordnung aus Magneten besteht.

3. Vorrichtung nach Anspruch 1, **dadurch gekennzeichnet,** daß die Aufweitungsanordnung aus Saugstutzen besteht, die mit einer Unterdruckquelle verbunden sind.

4. Vorrichtung nach einem der Ansprüche 1 bis 3, **dadurch** **gekennzeichnet,** daß die ausziehbaren Teile (2, 3) aus einer in einer Buchse (1) beweglichen hohlen Muffe (2) und aus einem Kolben (3) bestehen, der in der Muffe (2) gleitet und daß eine Verriegelungsanordnung, die durch Axialverschiebung der ausziehbaren Teile (2, 3) entriegelbar ist, zwischen der Muffe (2) und der Buchse (1) einerseits und zwischen der Muffe (2) und dem Stößel (3) andererseits vorgesehen ist.

5. Vorrichtung nach Anspruch 4, **dadurch gekennzeichnet,** daß die Verriegelungsanordnung aus einem Satz Kugeln (4) besteht, die in entsprechenden Radialöffnungen (2A) der Muffe (2) eingesetzt sind und die nacheinander mit einer Verriegelungsnut (4A) in der Buchse (1) und mit einer Verriegelungsnut (4B) im Kolben (3) zusammenwirken.
